(19) Europäisches Patentamt / European Patent Office / Office européen des brevets

(11) **EP 4 079 805 B1**

(12) **EUROPEAN PATENT SPECIFICATION**

(45) Date of publication and mention of the grant of the patent:
**18.02.2026 Bulletin 2026/08**

(21) Application number: **22161976.0**

(22) Date of filing: **14.03.2022**

(51) International Patent Classification (IPC):
***C08L 9/00*** (2006.01) ***C08K 3/04*** (2006.01)
***C08K 3/36*** (2006.01) ***C08K 5/25*** (2006.01)
***C08L 9/06*** (2006.01) ***B60C 1/00*** (2006.01)

(52) Cooperative Patent Classification (CPC):
(C-Sets available)
**C08L 9/00; B60C 1/0016; C08K 3/04; C08K 3/36; C08K 5/25; C08L 7/00; C08L 9/06;** B60C 2200/06; Y02T 10/86 (Cont.)

# (54) RUBBER COMPOSITION AND TIRE

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2021 JP 2021070483**

(43) Date of publication of application:
**26.10.2022 Bulletin 2022/43**

(73) Proprietor: **Sumitomo Rubber Industries, Ltd.**
**Kobe-shi, Hyogo-ken 651-0072 (JP)**

(72) Inventor: **GONDO, Satoshi**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 2 336 234** **JP-A- 2019 099 746**
**JP-A- 2021 080 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08K 3/04, C08K 3/36, C08K 5/25**

## Description

TECHNICAL FIELD

The present disclosure relates to a rubber composition and a tire.

BACKGROUND ART

Tires require various properties. For example, heavy duty tires used in trucks, buses, etc. require properties such as abrasion resistance and chipping resistance. Improvement of these properties has been desired.

SUMMARY OF DISCLOSURE

TECHNICAL PROBLEM

The present disclosure aims to solve the above problem and provide a rubber composition and a tire which have an improved overall performance in terms of abrasion resistance and chipping resistance. A rubber composition for tires containing natural rubber, silica, carbon black, and hydroxynaphthoic acid hydrazide or dihydroxybenzoic acid hydrazide, is disclosed in JP 2019-99746 A. A tire using a tread rubber composition comprising natural rubber, styrene-butadiene rubber, silica, carbon black, and 2-hydroxy-N'-(1,3-dimethylbutylidene)-3-naphthoic acid hydrazide is disclosed in EP 2 336 234 A1.

SOLUTION TO PROBLEM

The present disclosure relates to a tire, including a tread including a rubber composition, the rubber composition containing: rubber components including an isoprene-based rubber and a styrene-butadiene rubber; carbon black; silica; and at least one selected from the group consisting of compounds represented by the following formula (1):

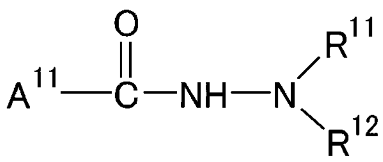

(1)

wherein $A^{11}$ represents a monovalent cyclic hydrocarbon group having at least one polar group, and $R^{11}$ and $R^{12}$ each independently represent at least one selected from the group consisting of a hydrogen atom, an acyl group, an amide group, an alkyl group, a cycloalkyl group, and an aryl group,

wherein the rubber composition has a total content of compounds of formula (1) of 30.0 parts by mass or less per 100 parts by mass of the rubber components; and the rubber composition has an isoprene-based rubber content of 50 to 90% by mass and a styrene-butadiene rubber content of 5 to 40% by mass, each based on 100% by mass of the rubber components.

ADVANTAGEOUS EFFECTS OF DISCLOSURE

The present disclosure provides a rubber composition containing rubber components including an isoprene-based rubber and a styrene-butadiene rubber (SBR), carbon black, silica, and at least one compound of formula (1).

Such a rubber composition provides an improved overall performance in terms of abrasion resistance and chipping resistance.

DESCRIPTION OF EMBODIMENTS

The rubber composition of the present disclosure contains rubber components including an isoprene-based rubber and a styrene-butadiene rubber (SBR), carbon black, silica, and at least one compound of formula (1). Thus, the rubber composition provides an improved overall performance in terms of abrasion resistance and chipping resistance.

The reason such an advantageous effect is not exactly clear but is believed to be as follows.

In order to improve chipping resistance, it has been proposed to use a combination of carbon black and silica or a blend of an isoprene-based rubber and SBR in a tread or other component of a heavy duty tire. However, it has been generally known that when silica is incorporated into such a rubber blend, the silica tends to be localized in the isoprene-based rubber. Thus, it is considered that when a compound of formula (1) or (2) is incorporated into a composition containing an isoprene-based rubber, SBR, carbon black, and silica, the polar group-containing cyclic substituent ($A^{11}$, $A^{21}$) in the compound interacts with the carbon black, while the structure represented by $-NH-NR^{11}R^{12}$ or $-NH-NR^{21}$ increases the affinity for the rubbers. As a result, it is considered that the carbon black, rather than the silica, is preferentially dispersed in the rubbers, and then when the silica is dispersed in the rubbers by a subsequent process such as a coupling reaction, localization of the silica in the isoprene-based rubber is inhibited so that the carbon black and silica can be uniformly dispersed and bonded to the polymers in the rubber phases. Accordingly, it is believed that the rubber composition provides such improved filler dispersion and therefore improved chipping resistance as well as improved abrasion resistance, resulting in an improved overall performance in terms of these properties.

Moreover, since rubber components including an isoprene-based rubber and SBR are combined with carbon black, silica, and a compound of formula (1) or (2), these components synergistically interact with each other, thereby synergistically improving the overall performance in terms of abrasion resistance and chipping resistance. In particular, the combination of carbon black and a compound of formula (1) or (2) synergistically improves the overall performance in terms of abrasion resistance and chipping resistance.

The rubber composition contains rubber components including an isoprene-based rubber and SBR.

Examples of the isoprene-based rubber include natural rubbers (NR), polyisoprene rubbers (IR), refined NR, modified NR, and modified IR. Examples of the NR include those commonly used in the tire industry such as SIR20, RSS#3, and TSR20. Any IR may be used, and examples include those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more. NR is preferred among these.

The isoprene-based rubber content based on 100% by mass of the rubber components is 50% by mass or more, preferably 60% by mass or more, particularly preferably 70% by mass or more, but is 90% by mass or less, preferably 80% by mass or less, still more preferably 75% by mass or less. When the isoprene-based rubber content is within the range indicated above, the advantageous effect tends to be better achieved.

Any SBR may be used, including, for example, emulsion-polymerized styrene-butadiene rubbers (E-SBR) and solution-polymerized styrene-butadiene rubbers (S-SBR). These may be used alone or in combinations of two or more.

The styrene content of the SBR is preferably 5.0% by mass or higher, more preferably 10.0% by mass or higher, still more preferably 15.0% by mass or higher, particularly preferably 20.0% by mass or higher, but is preferably 60.0% by mass or lower, more preferably 40.0% by mass or lower, still more preferably 35.0% by mass or lower, particularly preferably 30.0% by mass or lower. When the styrene content is within the range indicated above, the advantageous effect tends to be better achieved.

Herein, the styrene content of the rubber components is determined by $^1$H-NMR.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR.

The modified SBR may be any SBR having a functional group interactive with a filler such as silica or carbon black. Examples include chain end-modified SBR obtained by modifying at least one chain end of SBR with a compound (modifier) having the functional group (i.e., chain end-modified SBR terminated with the functional group); backbone-modified SBR having the functional group in the backbone; backbone- and chain end-modified SBR having the functional group in both the backbone and chain end (e.g., backbone- and chain end-modified SBR in which the backbone has the functional group and at least one chain end is modified with the modifier); and chain end-modified SBR into which a hydroxy or epoxy group has been introduced by modification (coupling) with a polyfunctional compound having two or more epoxy groups in the molecule. These may be used alone or in combinations of two or more.

Examples of the functional group include functional groups containing at least one atom selected from the group consisting of a nitrogen atom, an oxygen atom, and a silicon atom. These may be used alone or in combinations of two or more.

Specific examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. To more suitably achieve the advantageous effect, amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) are preferred among these.

The SBR content based on 100% by mass of the rubber components is 5% by mass or more, preferably 10% by mass or more, still more preferably 15% by mass or more, particularly preferably 20% by mass or more, but is 40% by mass or less, preferably 30% by mass or less. When the SBR content is within the range indicated above, the advantageous

effect tends to be better achieved.

The rubber composition may contain rubber components other than the isoprene-based rubber and SBR.

Examples of such other rubber components include diene rubbers other than these rubbers. Examples of such other diene rubbers include polybutadiene rubbers (BR), styrene-isoprene-butadiene rubbers (SIBR), ethylenepropylene-diene rubbers (EPDM), chloroprene rubbers (CR), and acrylonitrile butadiene rubbers (NBR). Still other rubber components include butyl-based rubbers and fluororubbers. These may be used alone or in combinations of two or more. BR is preferred among these. In this case, the advantageous effect can be more suitably achieved.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more.

The cis content of the BR is preferably 20% by mass or higher, more preferably 40% by mass or higher, still more preferably 60% by mass or higher, particularly preferably 80% by mass or higher, most preferably 90% by mass or higher. The upper limit is not limited. When the cis content is within the range indicated above, the advantageous effect tends to be better achieved.

Herein, the cis content of the rubber components can be measured by infrared absorption spectrometry.

The BR may also be either unmodified or modified BR. Examples of the modified BR include those into which functional groups as listed for the modified SBR have been introduced.

The BR used may be commercially available from Ube Industries, **Ltd.,** JSR Corporation, Asahi Kasei Corporation, Zeon Corporation, etc.

The BR content based on 100% by mass of the rubber components is preferably 5% by mass or more, more preferably 7% by mass or more, still more preferably 10% by mass or more, but is preferably 50% by mass or less, more preferably 40% by mass or less, still more preferably 30% by mass or less. When the BR content is within the range indicated above, the advantageous effect tends to be better achieved.

The rubber composition contains carbon black.

Examples of the carbon black include N134, N110, N220, N234, N219, N339, N330, N326, N351, N550, and N762. These may be used alone or in combinations of two or more.

The nitrogen adsorption specific surface area ($N_2SA$) of the carbon black is preferably 50 $m^2/g$ or more, more preferably 100 $m^2/g$ or more, still more preferably 120 $m^2/g$ or more, particularly preferably 135 $m^2/g$ or more. The $N_2SA$ is also preferably 250 $m^2/g$ or less, more preferably 200 $m^2/g$ or less, still more preferably 160 $m^2/g$ or less, particularly preferably 150 $m^2/g$ or less. When the $N_2SA$ is within the range indicated above, the advantageous effect tends to be better achieved.

The nitrogen adsorption specific surface area of the carbon black is determined in accordance with JIS K6217-2:2001.

The reason for such an advantageous effect is not exactly clear but is believed to be as follows.

Since as described earlier, the incorporation of a compound of formula (1) or (2) improves dispersion of carbon black in the rubbers, it is considered that even when the carbon black to be incorporated is adjusted to have a $N_2SA$ within a predetermined range, particularly a relatively high specific surface area, e.g., a $N_2SA$ of 135 $m^2/g$ or more, the carbon black and silica can be uniformly dispersed and bonded to the polymers in the rubber phases. Thus, it is believed that, for example, even when a carbon black having a relatively high specific surface area is incorporated, abrasion resistance is improved without a great concern with heat build-up, and the overall performance in terms of chipping resistance and abrasion resistance is improved.

The carbon black used may be commercially available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

The carbon black content per 100 parts by mass of the rubber components is preferably 5 parts by mass or more, more preferably 10 parts by mass or more, still more preferably 30 parts by mass or more, particularly preferably 40 parts by mass or more, particularly preferably 50 parts by mass or more, but is preferably 120 parts by mass or less, more preferably 100 parts by mass or less, still more preferably 90 parts by mass or less, particularly preferably 80 parts by mass or less. When the carbon black content is within the range indicated above, the advantageous effect tends to be better achieved.

The reason for such an advantageous effect is not exactly clear but is believed to be as follows.

Since as described earlier, the incorporation of a compound of formula (1) or (2) improves dispersion of carbon black in the rubbers, it is considered that even when the amount of carbon black incorporated is adjusted to a predetermined range, particularly a relatively large amount of 30 to 80 parts by mass, the carbon black and silica can be uniformly dispersed and bonded to the polymers in the rubber phases. Thus, it is believed that, for example, even when the amount of carbon black is 30 to 80 parts by mass, abrasion resistance is improved without a great concern with heat build-up, and the overall performance in terms of chipping resistance and abrasion resistance is improved.

The rubber composition contains silica.

Any silica may be used, and examples include dry silica (silicic anhydride) and wet silica (hydrous silicic acid).

These may be used alone or in combinations of two or more. Wet silica is preferred among these because it has a large number of silanol groups.

The silica used may be commercially available from Degussa, Rhodia, Tosoh Silica Corporation, Solvay Japan, Tokuyama Corporation, etc.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 170 $m^2/g$ or more. The $N_2SA$ is also preferably 300 $m^2/g$ or less, more preferably 250 $m^2/g$ or less. When the $N_2SA$ is within the range indicated above, the advantageous effect tends to be better achieved.

The $N_2SA$ of the silica can be measured in accordance with ASTM D3037-81.

The silica content per 100 parts by mass of the rubber components is preferably 3 parts by mass or more, more preferably 5 parts by mass or more, still more preferably 7 parts by mass or more, but is preferably 50 parts by mass or less, more preferably 40 parts by mass or less, still more preferably 20 parts by mass or less, particularly preferably 10 parts by mass or less. When the silica content is within the range indicated above, the advantageous effect tends to be better achieved.

The percentage of silica based on 100% by mass of the combined amount of silica and carbon black is preferably less than 85% by mass, more preferably less than 50% by mass, still more preferably less than 35% by mass, particularly preferably 20% by mass or less. The lower limit is not limited but is preferably 5% by mass or more, more preferably 7% by mass or more, still more preferably 10% by mass or more. When the percentage of silica is within the range indicated above, the advantageous effect tends to be better achieved.

The reason for such an advantageous effect is not exactly clear but is believed to be as follows.

Since the percentage of silica is lowered by adjusting the percentage of silica to less than a predetermined value, particularly less than 50% by mass, it is considered that when the silica is dispersed in the rubbers by a coupling reaction, localization of silica in the isoprene-based rubber is inhibited so that the carbon black and silica can be uniformly dispersed and bonded to the polymers in the rubber phases. Thus, it is believed that, for example, when the percentage of silica is adjusted to less than 50% by mass, abrasion resistance is improved without a great concern with heat build-up, even if the amount of carbon black is larger than the amount of silica, and therefore the overall performance in terms of chipping resistance and abrasion resistance is improved.

The rubber composition containing silica preferably contains a silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide or mercapto silane coupling agents are preferred among these.

The silane coupling agent used may be commercially available from Degussa, Momentive, Shin-Etsu Silicone, Tokyo Chemical Industry Co., Ltd., AZmax. Co., Dow Corning Toray Co., Ltd., etc.

The silane coupling agent content per 100 parts by mass of the silica is preferably 3 parts by mass or more, more preferably 5 parts by mass or more, but is preferably 25 parts by mass or less, more preferably 20 parts by mass or less, still more preferably 15 parts by mass or less. When the silane coupling agent content is within the range indicated above, the advantageous effect tends to be better achieved.

The rubber composition may contain additional fillers other than silica and carbon black. Examples of such additional fillers include materials known in the rubber industry, including inorganic fillers such as calcium carbonate, talc, alumina, clay, aluminum hydroxide, aluminum oxide, and mica, and poorly dispersible fillers.

The total filler content per 100 parts by mass of the rubber components is preferably 30 parts by mass or more, more preferably 40 parts by mass or more, still more preferably 50 parts by mass or more, particularly preferably 60 parts by mass or more, but is preferably 150 parts by mass or less, more preferably 120 parts by mass or less, still more preferably 100 parts by mass or less, particularly preferably 90 parts by mass or less. When the total filler content is within the range indicated above, the advantageous effect tends to be better achieved.

The rubber composition contains at least one selected from the group consisting of compounds represented by the following formula (1):

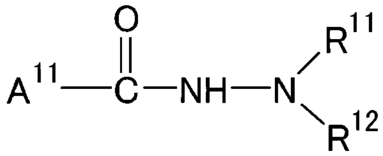

(1)

wherein $A^{11}$ represents a monovalent cyclic hydrocarbon group having at least one polar group, and $R^{11}$ and $R^{12}$ each independently represent at least one selected from the group consisting of a hydrogen atom, an acyl group, an amide group, an alkyl group, a cycloalkyl group, and an aryl group. In embodiments which are not claimed, the rubber composition contains at least one selected from the group consisting of compounds represented by the following formula (2):

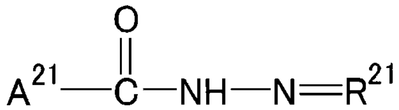

(2)

wherein $A^{21}$ represents a monovalent cyclic hydrocarbon group having at least one polar group, and $R^{21}$ represents a divalent hydrocarbon group.

$A^{11}$ in formula (1) represents a monovalent cyclic hydrocarbon group which has at least one polar group.

Herein, the term "cyclic hydrocarbon group" refers to a hydrocarbon group having a cyclic structure and encompasses both alicyclic and aromatic hydrocarbon groups. The term "alicyclic hydrocarbon group" refers to a hydrocarbon group having as a cyclic structure only an alicyclic structure without an aromatic ring structure and encompasses both monocyclic and polycyclic alicyclic hydrocarbon groups. However, it does not necessarily consist only of an alicyclic structure and may partially have an acyclic structure. The term "aromatic hydrocarbon group" refers to a hydrocarbon group having an aromatic ring structure as a cyclic structure and encompasses both monocyclic and polycyclic aromatic hydrocarbon groups. However, it does not necessarily consist only of an aromatic ring structure and may partially have an acyclic structure or an alicyclic structure. The number of ring members refers to the number of atoms constituting a cyclic structure. For a polycyclic structure, it means the number of atoms constituting the polycyclic structure.

The monovalent cyclic hydrocarbon group for $A^{11}$ may be an aliphatic ring group or an aromatic ring group. The aliphatic ring group for $A^{11}$ may have any number of rings, usually one or more rings, preferably two or more rings, but usually six or less rings, preferably four or less rings, more preferably three or less rings. The number of carbon atoms of the aliphatic ring group is also usually four or more, preferably six or more, more preferably eight or more, but is preferably 40 or less, more preferably 30 or less, still more preferably 20 or less, particularly preferably 15 or less. When the numbers are within the respective ranges indicated above, the advantageous effect tends to be better achieved.

Specific examples of the aliphatic ring in the aliphatic ring group include a cyclohexane ring, a cycloheptane ring, a cyclodecane ring, a cyclododecane ring, a norbornane ring, an isobornane ring, and an adamantane ring. These may be used alone or in combinations of two or more.

The aromatic ring group for $A^{11}$ may have any number of rings, usually one or more rings, preferably two or more rings, but usually 10 or less rings, preferably five or less rings. The aromatic ring group may be an aromatic hydrocarbon ring group or an aromatic heterocyclic ring group. The number of carbon atoms of the aromatic ring group is usually four or more, preferably five or more, more preferably six or more, but is preferably 30 or less, more preferably 20 or less, still more preferably 15 or less. When the numbers are within the respective ranges indicated above, the advantageous effect tends to be better achieved.

Specific examples of the aromatic ring in the aromatic ring group include a benzene ring, a naphthalene ring, an anthracene ring, a phenanthrene ring, a perylene ring, a tetracene ring, a pyrene ring, a benzpyrene ring, a chrysene ring, a triphenylene ring, an acenaphthene ring, a fluoranthene ring, and a fluorene ring. The aromatic ring may also be the aromatic heterocyclic ring in an aromatic heterocyclic ring group and may be a monocyclic ring or a fused ring. Examples of the aromatic heterocyclic ring group include furan ring, benzofuran ring, thiophene ring, benzothiophene ring, pyrrole ring, pyrazole ring, imidazole ring, oxadiazole ring, indole ring, carbazole ring, pyrroloimidazole ring, pyrrolopyrazole ring, pyrrolopyrrole ring, thienopyrrole ring, thienothiophene ring, furopyrrole ring, furofuran ring, thienofuran ring, benzisoxazole ring, benzisothiazole ring, benzimidazole ring, pyridine ring, pyrazine ring, pyridazine ring, pyrimidine ring, triazine ring, quinoline ring, isoquinoline ring, cinoline ring, quinoxaline ring, phenanthridine ring, perimidine ring, qunazoline ring, quinazolinone ring, and azulene ring groups. These may be used alone or in combinations of two or more.

$A^{11}$ has at least one polar group. The polar group may be of any type, and examples include an amino group, a nitrile group, an ammonium group, an amide group (-$CONH_2$), a hydrazo group (-NH-NH-R wherein R represents an alkyl group or an aryl group), an azo group (-N=N-R wherein R represents an alkyl group or an aryl group), a hydroxy group, a

carboxy group, an acyl group (-CO-R wherein R represents an alkyl group or an aryl group), an epoxy group, an oxycarbonyl group (-CO-O-R wherein R represents an alkyl group or an aryl group), an alkoxysilyl group, an alkylamino group, and a nitro group. The alkyl group in the hydrazo group, the azo group, the acyl group, the oxycarbonyl group, the alkoxysilyl group, or the alkylamino group is preferably a C1-C6 linear or branched alkyl group. Specific examples include a methyl group, an ethyl group, a propyl group, an isopropyl group, a n-butyl group, a tert-butyl group, and a n-hexyl group. The aryl group in the hydrazo group, the azo group, the acyl group, or the oxycarbonyl group preferably has 6 to 10 carbon atoms. Specific examples include a phenyl group and a naphthyl group. To better achieve the advantageous effect, a hydroxy group, an amino group, and a nitro group are preferred among the listed polar groups, with a hydroxy group being more preferred.

The reason for such an advantageous effect is not exactly clear but is believed to be as follows.

When a hydroxy group, an amino group, a nitro group, or the like is selected as the polar group of the polar group-containing cyclic substituent ($A^{11}$, $A^{21}$) in the compound of formula (1) or (2), it is considered that the interaction with the carbon black is further improved, and as a result the carbon black, rather than the silica, is preferentially dispersed in the rubbers, and localization of the silica in the isoprene-based rubber is further inhibited so that the carbon black and silica can be uniformly dispersed and bonded to the polymers in the rubber phases. Accordingly, it is believed that the rubber composition provides such improved filler dispersion and therefore improved chipping resistance as well as improved abrasion resistance, resulting in a further improved overall performance in terms of these properties.

$R^{11}$ and $R^{12}$ in formula (1) each independently represent a hydrogen atom, an acyl group (-CO-R wherein R represents an alkyl group or an aryl group), an amide group ($-CONH_2$), an alkyl group, a cycloalkyl group, or an aryl group. The alkyl group as $R^{11}$ or $R^{12}$ and the alkyl group in the acyl group each preferably have 1 to 6 carbon atoms and may be linear or branched. Specific examples include a methyl group, an ethyl group, a propyl group, an isopropyl group, a n-butyl group, a tert-butyl group, and a n-hexyl group. The cycloalkyl group preferably has 5 to 10 carbon atoms, and specific examples include a cycloheptyl group, a cyclohexyl group, a cyclooctyl group, and a cyclodecanyl group. The aryl group as $R^{11}$ or $R^{12}$ and the aryl group in the acyl group each preferably have 6 to 10 carbon atoms, and specific examples include a phenyl group and a naphthyl group. Among these, $R^{11}$ and $R^{12}$ are each preferably a hydrogen atom or an alkyl group, more preferably both a hydrogen atom, in order to better achieve the advantageous effect.

The reason for such an advantageous effect is not exactly clear but is believed to be as follows.

When a hydrogen atom, an alkyl group, or the like is selected as $R^{11}$ or $R^{12}$ in the compound of formula (1), it is considered that the structure represented by $-NH-NR^{11}R^{12}$ further increases the affinity for the rubbers, and as a result the carbon black, rather than the silica, is preferentially dispersed in the rubbers, and localization of the silica in the isoprene-based rubber is further inhibited so that the carbon black and silica can be uniformly dispersed and bonded to the polymers in the rubber phases. Accordingly, it is believed that the rubber composition provides such improved filler dispersion and therefore improved chipping resistance as well as improved abrasion resistance, resulting in a further improved overall performance in terms of these properties.

$A^{21}$ in formula (2) represents a monovalent cyclic hydrocarbon group which has at least one polar group.

Suitable examples of the monovalent cyclic hydrocarbon group for $A^{21}$ include those described for the monovalent cyclic hydrocarbon group for $A^{11}$.

$A^{21}$ has at least one polar group. The polar group may be of any type, and suitable examples include those described for the polar group for $A^{11}$.

$R^{21}$ in formula (2) represents a divalent hydrocarbon group. The divalent hydrocarbon group may contain at least one heteroatom. Examples of the heteroatom include an oxygen atom, a sulfur atom, and a nitrogen atom. Examples of the divalent hydrocarbon group as $R^{21}$ include divalent saturated or unsaturated aliphatic groups, cycloalkylene groups, and arylene groups.

The divalent saturated or unsaturated aliphatic group used as $R^{21}$ may be linear or branched. The divalent saturated or unsaturated aliphatic group preferably has 1 to 30 carbon atoms, more preferably 1 to 12 carbon atoms, still more preferably 1 to 8 carbon atoms, particularly preferably 1 to 5 carbon atoms.

The cycloalkylene group used as $R^{21}$ preferably has 5 to 10 carbon atoms. Specific examples include a cycloheptylene group, a cyclohexylene group, a cyclooctylene group, and a cyclodecanylene group.

The arylene group used as $R^{21}$ preferably has 5 to 10 carbon atoms. Examples include a cyclopentadienyl group.

To better achieve the advantageous effect, the compounds of formula (1) are preferred among the compounds of formulas (1) and (2), with compounds represented by the following formula (1-1) being more preferred.

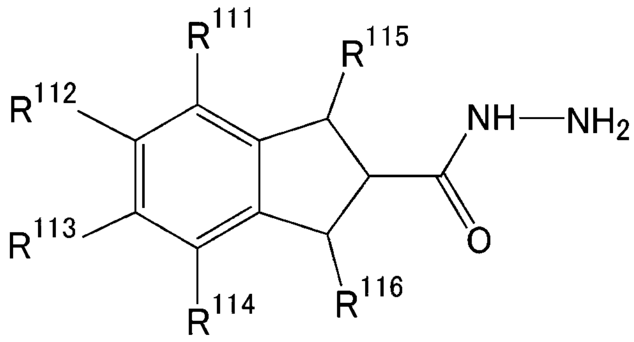

(1-1)

In the formula, $R^{111}$ to $R^{116}$ each independently represent at least one selected from the group consisting of a hydrogen atom, a hydroxy group, an amino group, and a nitro group.

To better achieve the advantageous effect, $R^{111}$ to $R^{116}$ in formula (1-1) are each preferably a hydrogen atom or a hydroxy group. At least one of $R^{111}$ to $R^{114}$ is preferably a hydroxy group, an amino group, or a nitro group, more preferably a hydroxy group. At least one of $R^{115}$ and $R^{116}$ is also preferably a hydroxy group, an amino group, or a nitro group, more preferably a hydroxy group.

Specific suitable examples of the compounds of formula (1) include (1S,2S)-2,3-dihydro-1,5-dihydroxy-1H-indene-2-carboxylic acid hydrazide, (1S,2R)-2,3-dihydro-1-hydroxy-1H-indene-2-carboxylic acid hydrazide, (1S,2S)-2,3-dihydro-1-hydroxy-1H-indene-2-carboxylic acid hydrazide, (1S,2R)-2,3-dihydro-2-hydroxy-1H-indene-1-carboxylic acid hydrazide, 1,2,3,4-tetrahydro-1-oxo-2-naphthalenecarboxylic acid hydrazide, and (1S,2R)-1,2,3,4-tetrahydro-1,6-dihydroxy-2-naphthalenecarboxylic acid hydrazide.

Other examples of the compounds of formula (1) include 2,4-dihydroxybenzohydrazide, 3,5-dihydroxybenzohydrazide, 2,3-dihydroxybenzohydrazide, 2,5-dihydroxybenzohydrazide, 2,6-dihydroxybenzohydrazide, 3,4-dihydroxybenzohydrazide, 3,6-dihydroxybenzohydrazide, 4,5-dihydroxybenzohydrazide, 4,6-dihydroxybenzohydrazide, 5,6-dihydroxybenzohydrazide, 2,3,4-trihydroxybenzohydrazide, 2,3,5-trihydroxybenzohydrazide, 2,3,6-trihydroxybenzohydrazide, 2,4,5-trihydroxybenzohydrazide, 2,4,6-trihydroxybenzohydrazide, and 2,5,6-trihydroxybenzohydrazide.

These compounds of formula (1) may be used alone or in combinations of two or more.

The compounds of formulas (1) and (2) can be synthesized by known methods, e.g., as described in JP 2019-508407 T.

Usable commercial products of the compounds of formulas (1) and (2) are available from, for example, Tokyo Chemical Industry Co., Ltd., FUJIFILM Wako Pure Chemical Corporation, etc.

The total content (combined amount) of compounds of formula (1) per 100 parts by mass of the rubber components is preferably 0.2 parts by mass or more, more preferably 0.4 parts by mass or more, still more preferably 0.5 parts by mass or more, but is 30.0 parts by mass or less, preferably 10.0 parts by mass or less, still more preferably 5.0 parts by mass or less, particularly preferably 2.0 parts by mass or less, most preferably 1.0 parts by mass or less. When the total content is within the range indicated above, the advantageous effect tends to be better achieved.

The reason for such an advantageous effect is not exactly clear but is believed to be as follows.

When the total content of compounds of formulas (1) and (2) is adjusted to a predetermined range, particularly 30.0 parts by mass or less, it is considered that slipping of the materials during mixing can be prevented so that the carbon black and silica can be uniformly dispersed and bonded to the polymers in the rubber phases. Thus, it is believed that, for example, when the total content of compounds of formulas (1) and (2) is adjusted to 30.0 parts by mass or less, the overall performance in terms of chipping resistance and abrasion resistance is improved.

The rubber composition may contain a plasticizer.

Herein, the term "plasticizer" refers to a material that imparts plasticity to rubber components, and conceptionally includes liquid plasticizers (plasticizers which are liquid at 25°C) and solid plasticizers (plasticizers which are solid at 25°C). Specifically, it is, for example, a component that can be extracted with acetone from a rubber composition containing it. These may be used alone or in combinations of two or more.

The total plasticizer content (the combined amount of liquid plasticizers and solid plasticizers) per 100 parts by mass of the rubber components is preferably 30 parts by mass or less, more preferably 5 parts by mass or less, still more preferably 2 parts by mass or less, and may be 0 parts by mass. When the total plasticizer content is within the range indicated above, the advantageous effect tends to be better achieved.

The plasticizer content includes the amount of the oils contained in the rubbers (oil extended rubbers) or sulfur (oil-containing sulfur), if used.

Examples of the liquid plasticizers include oils, liquid polymers (e.g., diene polymers, olefin polymers, ester polymers), liquid resins, essential oils from natural sources, such as turpentine oil, and ester plasticizers. Examples of the solid plasticizers include solid resins which are solid at 25°C, such as those generally used in the tire industry. These may

be used alone or in combinations of two or more. Preferred among the liquid plasticizers is at least one selected from the group consisting of oils, liquid polymers, and liquid resins, more preferably from oils, still more preferably from process oils.

Non-limiting examples of the oils include conventional oils, including process oils such as paraffinic process oils, aromatic process oils, and naphthenic process oils, low polycyclic aromatic (PCA) process oils such as TDAE and MES, plant oils, and mixtures thereof. These may be used alone or in combinations of two or more. Paraffinic process oils are preferred among these.

The oil used may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Examples of the liquid resins include resins which are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

The liquid resin used may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of the liquid diene polymers include diene polymers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). The chain end or backbone of these polymers may be modified with a polar group.

The liquid diene polymer used may be commercially available from Sartomer, Kuraray Co., Ltd., etc.

The liquid plasticizer (preferably, oil) content per 100 parts by mass of the rubber components is preferably 30 parts by mass or less, more preferably 5 parts by mass or less, still more preferably 2 parts by mass or less, and may be 0 parts by mass. When the liquid plasticizer content is within the range indicated above, the advantageous effect tends to be better achieved.

The plasticizer content includes the amount of the oils contained in the rubbers (oil extended rubbers) or sulfur (oil-containing sulfur), if used.

Examples of the solid plasticizers include solid resins generally used as compounding ingredients for tires. Specific examples include terpene resins, rosin resins, styrene resins, olefin resins, C5 resins, C9 resins, C5/C9 resins, coumarone resins, indene resins, coumarone-indene resins, acrylic resins, and urethane resins. These resins may be used alone, or two or more of them may be used in admixture. Moreover, the resins themselves may be copolymers of multiple types of monomer components.

The resin used may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The softening point of the resin is preferably 30°C or higher, more preferably 50°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the resin is determined in accordance with JIS K 6220-1:2001 using a ring and ball softening point measuring apparatus and defined as the temperature at which the ball drops down.

The solid plasticizer (preferably, resin) content per 100 parts by mass of the rubber components is preferably 30 parts by mass or less, more preferably 5 parts by mass or less, still more preferably 2 parts by mass or less, and may be 0 parts by mass. When the solid plasticizer content is within the range indicated above, the advantageous effect tends to be better achieved.

The rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur used may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The sulfur content per 100 parts by mass of the rubber components is preferably 0.1 parts by mass or more, more preferably 0.5 parts by mass or more, still more preferably 0.8 parts by mass or more, but is preferably 10 parts by mass or less, more preferably 7 parts by mass or less, still more preferably 5 parts by mass or less, particularly preferably 3 parts by mass or less, most preferably 2 parts by mass or less. When the sulfur content is within the range indicated above, the advantageous effect tends to be better achieved.

The rubber composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators are preferred among these.

The vulcanization accelerator used may be commercially available from Kawaguchi Chemical Industry Co., Ltd., Ouchi Shinko Chemical Industrial Co., Ltd., Rhein Chemie, Sanshin Chemical Industry Co., Ltd., etc.

The vulcanization accelerator content per 100 parts by mass of the rubber components is preferably 0.5 parts by mass or more, more preferably 1 part by mass or more, but is preferably 10 parts by mass or less, more preferably 5 parts by mass or less. When the vulcanization accelerator content is within the range indicated above, the advantageous effect tends to be better achieved.

The rubber composition preferably contains stearic acid.

The stearic acid used may be a conventional one, e.g., available from NOF Corporation, Kao Corporation, FUJIFILM Wako Pure Chemical Corporation, or Chiba Fatty Acid Co., Ltd.

The stearic acid content per 100 parts by mass of the rubber components is preferably 0.5 parts by mass or more, more preferably 1 part by mass or more, but is preferably 5 parts by mass or less, more preferably 3 parts by mass or less. When the stearic acid content is within the range indicated above, the advantageous effect tends to be better achieved.

The rubber composition may contain zinc oxide.

The zinc oxide used may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The zinc oxide content per 100 parts by mass of the rubber components is preferably 0.5 parts by mass or more, more preferably 1 part by mass or more, but is preferably 10 parts by mass or less, more preferably 5 parts by mass or less. When the zinc oxide content is within the range indicated above, the advantageous effect tends to be better achieved.

The rubber composition may contain an antioxidant.

Examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine or quinoline antioxidants, with p-phenylenediamine antioxidants being more preferred.

The antioxidant used may be commercially available from Seiko Chemical Co., Ltd., Sumitomo Chemical Co., Ltd., Ouchi Shinko Chemical Industrial Co., Ltd., Flexsys, etc.

The antioxidant content per 100 parts by mass of the rubber components is preferably 0.5 parts by mass or more, more preferably 1 part by mass or more, but is preferably 10 parts by mass or less, more preferably 5 parts by mass or less. When the antioxidant content is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

The wax used may be commercially available from Ouchi Shinko Chemical Industrial Co., Ltd., Nippon Seiro Co., Ltd., Seiko Chemical Co., Ltd., etc.

The wax content per 100 parts by mass of the rubber components is preferably 0.5 parts by mass or more, more preferably 1 part by mass or more, but is preferably 10 parts by mass or less, more preferably 7 parts by mass or less. When the wax content is within the range indicated above, the advantageous effect tends to be better achieved.

In addition to the above-mentioned components, the rubber composition may contain additives commonly used in the tire industry, such as vulcanizing agents other than sulfur (for example, organic crosslinking agents, organic peroxides). The amount of these components is preferably 0.1 parts by mass or more but preferably 200 parts by mass or less per 100 parts by mass of the rubber components.

To better achieve the advantageous effect, the rubber composition desirably satisfies the following relationship with respect to the carbon black content (parts by mass) per 100 parts by mass of the rubber components and the total styrene content (% by mass) of the rubber components: Carbon black content/Total styrene content > 4.0.

The ratio of "Carbon black content/Total styrene content" is preferably 6.0 or higher, more preferably 8.0 or higher, still more preferably 9.0 or higher, particularly preferably 10.0 or higher. The upper limit is preferably 20.0 or lower, more preferably 17.0 or lower, still more preferably 15.0 or lower, particularly preferably 13.0 or lower. When the ratio is within the

range indicated above, it is considered that the proportion of the carbon black that is dispersible without the influence of steric hindrance by the styrene moieties in the rubber is increased so that the distribution of the carbon black in the isoprene-based rubber phase can be facilitated.

To better achieve the advantageous effect, the rubber composition desirably satisfies the following relationship with respect to the silica content (parts by mass) per 100 parts by mass of the rubber components and the total styrene content (% by mass) of the rubber components: Silica content/Total styrene content < 7.0.

The ratio of "Silica content/Total styrene content" is preferably 6.0 or lower, more preferably 4.0 or lower, still more preferably 3.0 or lower, particularly preferably 2.5 or lower. The lower limit is preferably 0.5 or higher, more preferably 1.0 or higher, still more preferably 1.2 or higher, particularly preferably 1.4 or higher. When the ratio is within the range indicated above, it is considered that the silica is more likely to be spread to the double bonds other than those of the styrene moieties in the rubber components, and thus the silica can have a greater reinforcement effect.

The total styrene content of the rubber components is preferably 2.0% by mass or higher, more preferably 3.0% by mass or higher, still more preferably 4.0% by mass or higher, particularly preferably 4.5% by mass or higher, but is preferably 15.0% by mass or lower, more preferably 10.0% by mass or lower, still more preferably 8.0% by mass or lower, particularly preferably 6.0% by mass or lower. When the total styrene content is within the range indicated above, it is considered that the distribution of the carbon black in the isoprene-based rubber phase can be facilitated, and at the same time the silica can provide greater reinforcement.

Here, the total styrene content of the rubber components refers to the total amount (unit: % by mass) of the styrene moieties in the total rubber components, and may be calculated by the equation: $\Sigma$ [(Amount of each rubber component) $\times$ (Styrene content of the each rubber component)/100]. For example, when 100% by mass of rubber components consist of 85% by mass of a SBR having a styrene content of 40% by mass, 5% by mass of a SBR having a styrene content of 25% by mass, and 10% by mass of a BR having a styrene content of 0% by mass, the total styrene content of the rubber components is 35.25% by mass (= 85 $\times$ 40/100 + 5 $\times$ 25/100 + 10 $\times$ 0/100).

The styrene content of each rubber component can be measured by nuclear magnetic resonance (NMR).

Moreover, although the total styrene content of the rubber components is calculated according to the above-mentioned equation in Examples herein, it may be determined by analyzing the tire using, for example, a pyrolysis gas chromatography/mass spectrometry (Py-GC/MS) system.

The rubber composition may be prepared, for example, by kneading the components using a rubber kneading machine such as an open roll mill or a Banbury mixer, and then vulcanizing the kneaded mixture.

The kneading conditions are as follows: in a base kneading step of kneading additives other than crosslinking agents (vulcanizing agents) and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower, preferably 80 to 110°C. The composition obtained after kneading vulcanizing agents and vulcanization accelerators is usually vulcanized by press vulcanization, for example. The vulcanization temperature is usually 140 to 190°C, preferably 150 to 185°C.

The rubber composition may be used in tire components (i.e., as a tire rubber composition), for example. In particular, the rubber composition is suitable for use in treads (cap treads).

The tire of the present disclosure can be produced from the rubber composition by usual methods. Specifically, the unvulcanized rubber composition containing additives as needed may be extruded into the shape of a tire component such as a tread and then formed and assembled with other tire components in a usual manner on a tire building machine to build an unvulcanized tire, which may then be vulcanized and pressurized in a vulcanizer to produce a tire.

Non-limiting examples of the tire include pneumatic tires, solid tires, and airless tires. Pneumatic tires are preferred among these.

The tire may be used as a passenger car tire, a large passenger car tire, a large SUV tire, a heavy duty tire (e.g., a truck and bus tire), a two-wheeled vehicle tire, a racing tire, a winter tire (a studless winter tire, snow tire, cold weather tire, or studded tire), an all-season tire, a run-flat tire, an aircraft tire, a mining tire, etc. Among these, the tire is suitable for use as a heavy duty tire. The term "heavy duty tire" refers to a tire with a maximum load capacity of 1400 kg or higher. The term "maximum load capacity" refers to a maximum load capacity specified for each tire by the standards in a standard system including standards according to which tires are provided, and may be, for example, "maximum load capacity" based on the load index (LI) in the Japan Automobile Tyre Manufacturers Association standard (JATMA standard), a maximum value shown in Table "TIRE LOAD LIMITS AT VARIOUS COLD INFLATION PRESSURES" in TRA, or "LOAD CAPACITY" in ETRTO.

EXAMPLES

The present disclosure is specifically described with reference to, but not limited to, examples.

The following lists the chemicals used in the examples and comparative examples.

NR: TSR20
SBR: SBR1502 (styrene content: 23.5% by mass) available from Sumitomo Chemical Co., Ltd.
BR: BR360L (cis-1,4 bond content: 98%) available from Ube Industries, Ltd.
Carbon black 1: Seast 6 (N220, $N_2SA$: 119 $m^2/g$) available from Tokai Carbon Co., Ltd.
Carbon black 2: VULCAN10H (N134, $N_2SA$: 144 $m^2/g$) available from Cabot Japan K.K.
Silica: Ultrasil VN3 ($N_2SA$: 175 $m^2/g$) available from Evonik Degussa
Silane coupling agent: Si-266 available from Evonik Degussa
Wax: Ozoace wax available from Nippon Seiro Co., Ltd.
Antioxidant 6C: NOCRAC 6C (N-phenyl-N'-(1,3-dimethylbutyl)-p-phenylenediamine) available from Ouchi Shinko Chemical Industrial Co., Ltd.
Antioxidant RD: NOCRAC RD (poly(2,2,4-trimethyl-1,2-dihydroquinoline) available from Ouchi Shinko Chemical Industrial Co., Ltd.
Stearic acid: KIRI available from NOF Corporation
Zinc oxide: zinc oxide #2 available from Mitsui Mining & Smelting Co., Ltd.
Compound A: (1S,2S)-2,3-dihydro-1,5-dihydroxy-1H-indene-2-carboxylic acid hydrazide (product of production example below)
Compound B: 3,5-dihydroxybenzohydrazide available from Tokyo Chemical Industry Co., Ltd.
5% Oil-containing sulfur: 5% oil-treated powdered sulfur (soluble sulfur with an oil content of 5% by mass) available from Tsurumi Chemical Industry Co., Ltd.
Vulcanization accelerator: "Sanceler NS-G" available from Sanshin Chemical Industry Co., Ltd.

(Production Example)

(1S,2S)-2,3-Dihydro-1,5-dihydroxy-1H-indene-2-carboxylic acid hydrazide can be synthesized in accordance with the method described in JP 2019-508407 T.

Simulations were performed according to Tables 1 and 2. The results are shown in Tables 1 and 2.

The preparation conditions and the test conditions are as described below.

(Preparation conditions)

The chemicals other than the sulfur and vulcanization accelerator were kneaded at 150°C for four minutes using a 1.7 L Banbury mixer (Kobe Steel, Ltd.). Subsequently, the sulfur and vulcanization accelerator were added, and they were kneaded at 80°C for five minutes using an open roll mill. Then, in a simulation, the unvulcanized rubber composition was formed into the shape of a tread and assembled with other tire components to build an unvulcanized tire. The unvulcanized tire was press-vulcanized at 150°C for 12 minutes to obtain a tire (size: 11R22.5).

(Abrasion resistance test conditions)

The tire obtained in the simulation was evaluated using a car under the following conditions.

A truck with a set of tires was driven at 80 km/h for 50,000 km. Then, the amount of wear was determined and expressed as an index (abrasion resistance index) relative to that of the reference comparative example taken as 100. A higher index indicates better abrasion resistance.

It should be noted that the reference comparative examples in Tables 1 and 2 are Comparative Examples 1-4 and 2-4, respectively.

(Chipping resistance test conditions)

The tire obtained in the simulation was evaluated using a car under the following conditions.

A truck with a set of tires was driven on off-road surfaces at 60 km/h for 50,000 km. Then, the chipping resistance was determined and expressed as an index (chipping resistance index) relative to that of the reference comparative example taken as 100. A higher index indicates better chipping resistance.

It should be noted that the reference comparative examples in Tables 1 and 2 are Comparative Examples 1-4 and 2-4, respectively.

[Table 1]

| | | Example | | | | | | Comparative Example | | | | | |
|---|---|---|---|---|---|---|---|---|---|---|---|---|---|
| | | 1-1 | 1-2 | 1-3 | 1-4 | 1-5 | 1-6 | 1-1 | 1-2 | 1-3 | 1-4 | 1-5 | 1-6 |
| Formulation (parts by mass) | NR | 70 | 70 | 70 | 70 | 70 | 70 | 70 | 70 | 70 | 70 | 70 | 70 |
| | SBR | 20 | 20 | 20 | 20 | 20 | 20 | 20 | 20 | 20 | 20 | 20 | 20 |
| | BR | 10 | 10 | 10 | 10 | 10 | 10 | 10 | 10 | 10 | 10 | 10 | 10 |
| | Carbon black 1 | 25 | 10 | 40 | 50 | 50 | 50 | 10 | 25 | 40 | 50 | | |
| | Carbon black 2 | | | | | | | | | | | | |
| | Silica | 25 | 40 | 20 | 10 | 10 | 10 | 40 | 25 | 20 | 10 | 50 | 50 |
| | Silane coupling agent | 2.0 | 3.2 | 1.6 | 0.8 | 0.8 | 0.8 | 3.2 | 2.0 | 2.0 | 0.8 | 4.0 | 4.0 |
| | Wax | 1.4 | 1.4 | 1.4 | 1.4 | 1.4 | 1.4 | 1.4 | 1.4 | 1.4 | 1.4 | 1.4 | 1.4 |
| | Antioxidant 6C | 1.5 | 1.5 | 1.5 | 1.5 | 1.5 | 1.5 | 1.5 | 1.5 | 1.5 | 1.5 | 1.5 | 1.5 |
| | Antioxidant RD | 0.5 | 0.5 | 0.5 | 0.5 | 0.5 | 0.5 | 0.5 | 0.5 | 0.5 | 0.5 | 0.5 | 0.5 |
| | Stearic acid | 2.5 | 2.5 | 2.5 | 2.5 | 2.5 | 2.5 | 2.5 | 2.5 | 2.5 | 2.5 | 2.5 | 2.5 |
| | Zinc oxide | 3.0 | 3.0 | 3.0 | 3.0 | 3.0 | 3.0 | 3.0 | 3.0 | 3.0 | 3.0 | 3.0 | 3.0 |
| | Compound A | 1.0 | 1.0 | 1.0 | 1.0 | 0.5 | | | | | | 1.0 | |
| | Compound B | | | | | | 0.5 | | | | | | |
| | Sulfur | 1.0 | 1.0 | 1.0 | 1.0 | 1.0 | 1.0 | 1.0 | 1.0 | 1.0 | 1.0 | 1.0 | 1.0 |
| | Vulcanization accelerator | 1.3 | 1.3 | 1.3 | 1.3 | 1.3 | 1.3 | 1.3 | 1.3 | 1.3 | 1.3 | 1.3 | 1.3 |
| Percentage of silica (% by mass) based on 100% by mass of combined amount of silica and carbon black | | 50 | 80 | 33 | 17 | 17 | 17 | 80 | 50 | 33 | 17 | 100 | 100 |
| Total styrene content (% by mass) of rubber components | | 4.7 | 4.7 | 4.7 | 4.7 | 4.7 | 4.7 | 4.7 | 4.7 | 4.7 | 4.7 | 4.7 | 4.7 |
| Carbon black content/ Total styrene content of rubber components | | 5.3 | 2.1 | 8.5 | 10.6 | 10.6 | 10.6 | 2.1 | 5.3 | 8.5 | 10.6 | 0.0 | 0.0 |
| Silica content/ Total styrene content of rubber components | | 5.3 | 8.5 | 4.3 | 2.1 | 2.1 | 2.1 | 8.5 | 5.3 | 4.3 | 2.1 | 10.6 | 10.6 |
| Evaluation | Abrasion resistance | 113 | 109 | 117 | 122 | 126 | 126 | 87 | 91 | 96 | 100 | 78 | 74 |
| | Chipping resistance | 113 | 109 | 117 | 122 | 126 | 126 | 87 | 91 | 96 | 100 | 78 | 74 |

[Table 2]

| | | Example | | | | | | Comparative Example | | | | | |
|---|---|---|---|---|---|---|---|---|---|---|---|---|---|
| | | 2-1 | 2-2 | 2-3 | 2-4 | 2-5 | 2-6 | 2-1 | 2-2 | 2-3 | 2-4 | 2-5 | 2-6 |
| Formulation (parts by mass) | NR | 80 | 80 | 80 | 80 | 80 | 80 | 80 | 80 | 80 | 80 | 80 | 80 |
| | SBR | 10 | 10 | 10 | 10 | 10 | 10 | 10 | 10 | 10 | 10 | 10 | 10 |
| | BR | 10 | 10 | 10 | 10 | 10 | 10 | 10 | 10 | 10 | 10 | 10 | 10 |
| | Carbon black 1 | | | | | | | | | | | | |
| | Carbon black 2 | 25 | 10 | 40 | 50 | 50 | 50 | 10 | 25 | 40 | 50 | | |
| | Silica | 25 | 40 | 20 | 10 | 10 | 10 | 40 | 25 | 20 | 10 | 50 | 50 |
| | Silane coupling agent | 2.0 | 3.2 | 1.6 | 0.8 | 0.8 | 0.8 | 3.2 | 2.0 | 2.0 | 0.8 | 4.0 | 4.0 |
| | Wax | 1.4 | 1.4 | 1.4 | 1.4 | 1.4 | 1.4 | 1.4 | 1.4 | 1.4 | 1.4 | 1.4 | 1.4 |
| | Antioxidant 6C | 1.5 | 1.5 | 1.5 | 1.5 | 1.5 | 1.5 | 1.5 | 1.5 | 1.5 | 1.5 | 1.5 | 1.5 |
| | Antioxidant RD | 0.5 | 0.5 | 0.5 | 0.5 | 0.5 | 0.5 | 0.5 | 0.5 | 0.5 | 0.5 | 0.5 | 0.5 |
| | Stearic acid | 2.5 | 2.5 | 2.5 | 2.5 | 2.5 | 2.5 | 2.5 | 2.5 | 2.5 | 2.5 | 2.5 | 2.5 |
| | Zinc oxide | 3.0 | 3.0 | 3.0 | 3.0 | 3.0 | 3.0 | 3.0 | 3.0 | 3.0 | 3.0 | 3.0 | 3.0 |
| | Compound A | 1.0 | 1.0 | 1.0 | 1.0 | 0.5 | | | | | | 1.0 | |
| | Compound B | | | | | | 0.5 | | | | | | |
| | Sulfur | 1.0 | 1.0 | 1.0 | 1.0 | 1.0 | 1.0 | 1.0 | 1.0 | 1.0 | 1.0 | 1.0 | 1.0 |
| | Vulcanization accelerator | 1.3 | 1.3 | 1.3 | 1.3 | 1.3 | 1.3 | 1.3 | 1.3 | 1.3 | 1.3 | 1.3 | 1.3 |
| Percentage of silica (% by mass) based on 100% by mass of combined amount of silica and carbon black | | 50 | 80 | 33 | 17 | 17 | 17 | 80 | 50 | 33 | 17 | 100 | 100 |
| Total styrene content (% by mass) of rubber components | | 2.4 | 2.4 | 2.4 | 2.4 | 2.4 | 2.4 | 2.4 | 2.4 | 2.4 | 2.4 | 2.4 | 2.4 |
| Carbon black content/ Total styrene content of rubber components | | 10.6 | 4.3 | 17.0 | 21.3 | 21.3 | 21.3 | 4.3 | 10.6 | 17.0 | 21.3 | 0.0 | 0.0 |
| Silica content/ Total styrene content of rubber components | | 10.6 | 17.0 | 8.5 | 4.3 | 4.3 | 4.3 | 17.0 | 10.6 | 8.5 | 4.3 | 21.3 | 21.3 |
| Evaluation | Abrasion resistance | 113 | 108 | 117 | 121 | 125 | 125 | 83 | 92 | 96 | 100 | 71 | 67 |
| | Chipping resistance | 113 | 109 | 117 | 122 | 126 | 126 | 87 | 91 | 96 | 100 | 78 | 74 |

As shown in the tables, the overall performance in terms of abrasion resistance and chipping resistance (expressed by the sum of the two indices of abrasion resistance and chipping resistance) was improved in the examples containing rubber components including an isoprene-based rubber and SBR, carbon black, silica, and at least one compound of formula (1). Moreover, the results of Comparative Examples 1-6, 1-1, and 1-5, and Example 1-2, for example, show that the combination of carbon black and the compound of formula (1) synergistically improved the overall performance in terms of abrasion resistance and chipping resistance.

Exemplary embodiments of the present disclosure include:

Embodiment 1. A tire, including a tread including a rubber composition,
the rubber composition containing:

rubber components including an isoprene-based rubber and a styrene-butadiene rubber;
carbon black;
silica; and
at least one selected from the group consisting of compounds represented by the following formula (1):

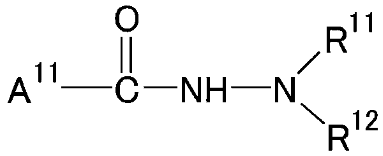

(1)

wherein $A^{11}$ represents a monovalent cyclic hydrocarbon group having at least one polar group, and $R^{11}$ and $R^{12}$ each independently represent at least one selected from the group consisting of a hydrogen atom, an acyl group, an amide group, an alkyl group, a cycloalkyl group, and an aryl group,

wherein the rubber composition has a total content of compounds of formula (1) of 30.0 parts by mass or less per 100 parts by mass of the rubber components, and the rubber composition has an isoprene-based rubber content of 50 to 90% by mass and a styrene-butadiene rubber content of 5 to 40% by mass, each based on 100% by mass of the rubber components.

Embodiment 2. The tire according to Embodiment 1,
wherein the rubber composition has a percentage of silica of less than 50% by mass based on 100% by mass of a combined amount of silica and carbon black.
Embodiment 3. The tire according to Embodiment 1 or 2,
wherein the rubber composition has a carbon black content of 30 to 80 parts by mass per 100 parts by mass of the rubber components.

Embodiment 6. The tire according to any one of Embodiments 1 to 3,
wherein the rubber composition has a polybutadiene rubber content of 5 to 30% by mass based on 100% by mass of the rubber components.
Embodiment 7. The tire according to any one of Embodiments 1 to 6,
wherein the carbon black includes a carbon black having a nitrogen adsorption specific surface area of 135 $m^2/g$ or more.
Embodiment 8. The tire according to any one of Embodiments 1 to 7,
wherein the polar group includes at least one selected from the group consisting of a hydroxy group, an amino group, and a nitro group.
Embodiment 9. The tire according to any one of Embodiments 1 to 8,
wherein $R^{11}$ and the $R^{12}$ are each at least one selected from the group consisting of a hydrogen atom and an alkyl group.
Embodiment 10. The tire according to any one of Embodiments 1 to 9,
wherein the rubber composition satisfies the following relationship with respect to a carbon black content per 100 parts by mass of the rubber components and a total styrene content based on 100% by mass of the rubber components:

$$\text{Carbon black content/Total styrene content} > 4.0.$$

Embodiment 11. The tire according to any one of Embodiments 1 to 10,
wherein the rubber composition satisfies the following relationship with respect to a silica content per 100 parts by mass of the rubber components and a total styrene content based on 100% by mass of the rubber components:

$$\text{Silica content/Total styrene content} < 7.0.$$

Embodiment 12. The tire according to any one of Embodiments 1 to 11, which is a heavy duty tire.

## Claims

1. A tire, comprising a tread comprising a rubber composition,
the rubber composition comprising:

rubber components comprising an isoprene-based rubber and a styrene-butadiene rubber;
carbon black;
silica; and

at least one selected from the group consisting of compounds represented by the following formula (1):

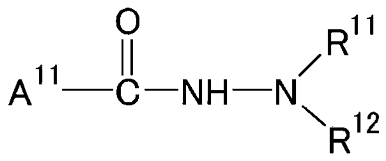

(1)

wherein $A^{11}$ represents a monovalent cyclic hydrocarbon group having at least one polar group, and $R^{11}$ and $R^{12}$ each independently represent at least one selected from the group consisting of a hydrogen atom, an acyl group, an amide group, an alkyl group, a cycloalkyl group, and an aryl group,
wherein the rubber composition has a total content of compounds of formula (1) of 30.0 parts by mass or less per 100 parts by mass of the rubber components, and
the rubber composition has an isoprene-based rubber content of 50 to 90% by mass and a styrene-butadiene rubber content of 5 to 40% by mass, each based on 100% by mass of the rubber components.

2. The tire according to claim 1,
wherein the rubber composition has a percentage of silica of less than 50% by mass based on 100% by mass of a combined amount of silica and carbon black.

3. The tire according to claim 1 or 2,
wherein the rubber composition has a carbon black content of 30 to 80 parts by mass per 100 parts by mass of the rubber components.

4. The tire according to any one of claims 1 to 3,
wherein the rubber composition has a polybutadiene rubber content of 5 to 30% by mass based on 100% by mass of the rubber components.

5. The tire according to any one of claims 1 to 4,
wherein the carbon black comprises a carbon black having a nitrogen adsorption specific surface area of 135 $m^2/g$ or more, wherein the nitrogen adsorption specific surface area of the carbon black is determined in accordance with JIS K6217-2:2001.

6. The tire according to any one of claims 1 to 5,
wherein the polar group comprises at least one selected from the group consisting of a hydroxy group, an amino group, and a nitro group.

7. The tire according to any one of claims 1 to 6,
wherein $R^{11}$ and $R^{12}$ are each at least one selected from the group consisting of a hydrogen atom and an alkyl group.

8. The tire according to any one of claims 1 to 7,
wherein the rubber composition satisfies the following relationship with respect to a carbon black content per 100 parts by mass of the rubber components and a total styrene content based on 100% by mass of the rubber components:

$$\text{Carbon black content/Total styrene content} > 4.0.$$

9. The tire according to any one of claims 1 to 8,
wherein the rubber composition satisfies the following relationship with respect to a silica content per 100 parts by mass of the rubber components and a total styrene content based on 100% by mass of the rubber components:

$$\text{Silica content/Total styrene content} < 7.0.$$

10. The tire according to any one of claims 1 to 9, which is a heavy duty tire.

11. The tire according to any one of claims 1 to 10, wherein the total content of compounds of formula (1) per 100 parts by

mass of the rubber components is 0.2 parts by mass or more.

**12.** The tire according to any one of claims 1 to 11, wherein the rubber composition comprises at least one compound represented by the following formula (1-1):

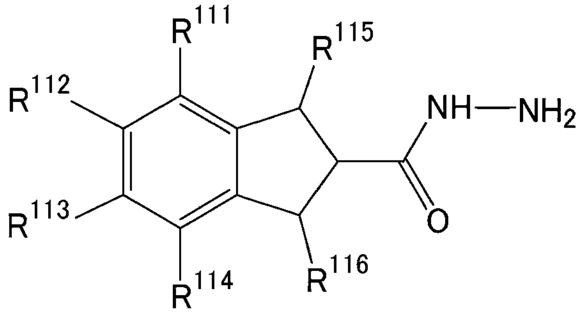

(1-1)

wherein $R^{111}$ to $R^{116}$ each independently represent at least one selected from the group consisting of a hydrogen atom, a hydroxy group, an amino group, and a nitro group.

**13.** The tire according to any one of claims 1 to 12, wherein the content of the silica per 100 parts by mass of the rubber components is 3 parts by mass or more.

**14.** The tire according to any one of claims 1 to 13, wherein the content of the silica per 100 parts by mass of the rubber components is 50 parts by mass or less.

**15.** The tire according to any one of claims 1 to 13, wherein the total filler content per 100 parts by mass of the rubber components is 30 parts by mass or more and 150 parts by mass or less.

**Patentansprüche**

**1.** Reifen, umfassend einen Laufstreifen, der eine Kautschukzusammensetzung umfasst, wobei die Kautschukzusammensetzung umfasst:

Kautschukkomponenten, die einen Isopren-basierten Kautschuk und einen Styrol-Butadien-Kautschuk umfassen;
Ruß;
Siliziumdioxid; und
mindestens eines, welches ausgewählt ist aus der Gruppe bestehend aus durch die folgende Formel (1) dargestellten Verbindungen:

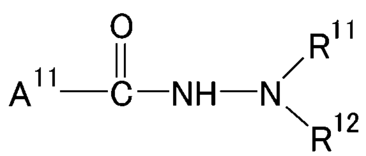

(1)

wobei $A^{11}$ eine einwertige zyklische Kohlenwasserstoffgruppe darstellt, die die mindestens eine polare Gruppe aufweist, und $R^{11}$ und $R^{12}$ jeweils unabhängig mindestens eines darstellen, welches ausgewählt ist aus der Gruppe bestehend aus einem Wasserstoffatom, einer Acylgruppe, einer Amidgruppe, einer Alkylgruppe, einer Cycloalkylgruppe und einer Arylgruppe,
wobei die Kautschukzusammensetzung einen Gesamtgehalt an Verbindungen der Formel (1) von 30,0 Massenteilen oder weniger pro 100 Massenteile der Kautschukkomponenten aufweist, und
die Kautschukzusammensetzung einen Gehalt an Isopren-basiertem Kautschuk von 50 bis 90 Massen-% und einen Gehalt an Styrol-Butadien-Kautschuk von 5 bis 40 Massen-% aufweist, jeweils bezogen auf 100 Massen-% der Kautschukkomponenten.

**2.** Reifen nach Anspruch 1,

wobei die Kautschukzusammensetzung einen prozentualen Anteil an Siliziumdioxid von weniger als 50 Massen-% aufweist, bezogen auf 100 Massen-% einer kombinierten Menge an Siliziumdioxid und Ruß.

**3.** Reifen nach Anspruch 1 oder 2, wobei die Kautschukzusammensetzung einen Rußgehalt von 30 bis 80 Massenteilen pro 100 Massenteile der Kautschukkomponenten aufweist.

**4.** Reifen nach einem der Ansprüche 1 bis 3, wobei die Kautschukzusammensetzung einen Polybutadienkautschuk-Gehalt von 5 bis 30 Massen-% aufweist, bezogen auf 100 Massen-% der Kautschukkomponenten.

**5.** Reifen nach einem der Ansprüche 1 bis 4, wobei der Ruß einen Ruß umfasst, der eine spezifische Stickstoffadsorptionsoberfläche von 135 $m^2/g$ oder mehr aufweist, wobei die spezifische Stickstoffadsorptionsoberfläche des Rußes gemäß JIS K6217-2:2001 bestimmt ist.

**6.** Reifen nach einem der Ansprüche 1 bis 5, wobei die polare Gruppe mindestens eines umfasst, welches ausgewählt ist aus der Gruppe bestehend aus einer Hydroxygruppe, einer Aminogruppe und einer Nitrogruppe.

**7.** Reifen nach einem der Ansprüche 1 bis 6, wobei $R^{11}$ und $R^{12}$ jeweils mindestens eines sind, welches ausgewählt ist aus der Gruppe bestehend aus einem Wasserstoffatom und einer Alkylgruppe.

**8.** Reifen nach einem der Ansprüche 1 bis 7, wobei die Kautschukzusammensetzung in Bezug auf einen Rußgehalt pro 100 Massenteile der Kautschukkomponenten und einen Gesamtstyrolgehalt bezogen auf 100 Massen-% der Kautschuckomponenten dem folgenden Verhältnis genügt:

$$\text{Rußgehalt/Gesamtstyrolgehalt} > 4{,}0.$$

**9.** Reifen nach einem der Ansprüche 1 bis 8, wobei die Kautschukzusammensetzung in Bezug auf einen Siliziumdioxidgehalt pro 100 Massenteile der Kautschukkomponenten und einen Gesamtstyrolgehalt bezogen auf 100 Massen-% der Kautschuckomponenten dem folgenden Verhältnis genügt:

$$\text{Siliziumdioxidgehalt/Gesamtstyrolgehalt} < 7{,}0.$$

**10.** Reifen nach einem der Ansprüche 1 bis 9, der ein Schwerlastreifen ist.

**11.** Reifen nach einem der Ansprüche 1 bis 10, wobei der Gesamtgehalt an Verbindungen der Formel (1) pro 100 Massenteile der Kautschuckomponenten 0,2 Massenteile oder mehr beträgt.

**12.** Reifen nach einem der Ansprüche 1 bis 11, wobei die Kautschukzusammensetzung mindestens eine durch die folgende Formel (1-1) dargestellte Verbindung umfasst:

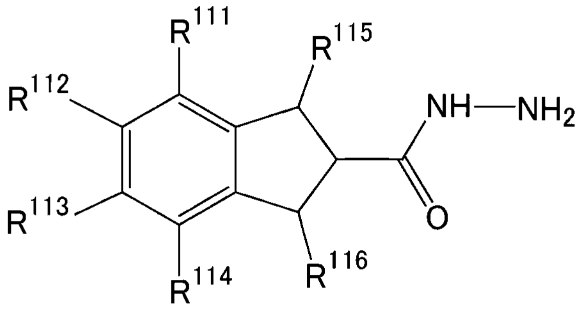

(1-1)

wobei $R^{111}$ bis $R^{116}$ jeweils unabhängig mindestens eines darstellen, welches ausgewählt ist aus der Gruppe bestehend aus einem Wasserstoffatom, einer Hydroxygruppe, einer Aminogruppe und einer Nitrogruppe.

**13.** Reifen nach einem der Ansprüche 1 bis 12, wobei der Gehalt des Siliziumdioxids pro 100 Massenteile der Kautschukkomponenten 3 Massenteile oder mehr beträgt.

**14.** Reifen nach einem der Ansprüche 1 bis 13, wobei der Gehalt des Siliziumdioxids pro 100 Massenteile der Kautschukkomponenten 50 Massenteile oder weniger beträgt.

**15.** Reifen nach einem der Ansprüche 1 bis 13, wobei der Gesamtfüllstoffgehalt pro 100 Massenteile der Kautschukkomponenten 30 Massenteile oder mehr und 150 Massenteile oder weniger beträgt.

## Revendications

**1.** Pneumatique, comprenant une bande de roulement comprenant une composition de caoutchouc, la composition de caoutchouc comprenant :

des composants de caoutchouc comprenant un caoutchouc à base d'isoprène et un caoutchouc de styrène-butadiène ;
du noir de charbon ;
de la silice ; et
au moins un choisi dans le groupe constitué par les composés représentés par la formule (1) suivante :

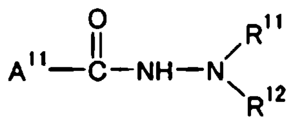

(1)

dans laquelle $A^{11}$ représente un groupe hydrocarbure cyclique monovalent ayant au moins un groupe polaire, et $R^{11}$ et $R^{12}$ représentent chacun indépendamment au moins un choisi dans le groupe constitué par un atome d'hydrogène, un groupe acyle, un groupe amide, un groupe alkyle, un groupe cycloalkyle, et un groupe aryle,
la composition de caoutchouc ayant une teneur totale de composés de formule (1) de 30,0 parties en masse ou moins par 100 parties en masse des composants de caoutchouc, et
la composition de caoutchouc a une teneur en caoutchouc à base d'isoprène de 50 à 90 % en masse et une teneur en caoutchouc de styrène-butadiène de 5 à 40 % en masse, chacune basée sur 100 % en masse des composants de caoutchouc.

**2.** Pneumatique selon la revendication 1,
dans lequel la composition de caoutchouc a un pourcentage de silice de moins de 50 % en masse sur la base de 100 % en masse d'une quantité combinée de silice et de noir de charbon.

**3.** Pneumatique selon la revendication 1 ou 2,
dans lequel la composition de caoutchouc a une teneur en noir de charbon de 30 à 80 parties en masse par 100 parties en masse des composants de caoutchouc.

**4.** Pneumatique selon l'une quelconque des revendications 1 à 3,
dans lequel la composition de caoutchouc a une teneur en caoutchouc de polybutadiène de 5 à 30 % en masse sur la base de 100 % en masse des composants de caoutchouc.

**5.** Pneumatique selon l'une quelconque des revendications 1 à 4,
dans lequel le noir de charbon comprend un noir de charbon ayant une surface spécifique d'adsorption d'azote de 135 $m^2/g$ ou plus, la surface spécifique d'adsorption d'azote du noir de charbon étant déterminée selon la norme JIS K6217-2 : 2001.

**6.** Pneumatique selon l'une quelconque des revendications 1 à 5,
dans lequel le groupe polaire comprend au moins un choisi dans le groupe constitué par un groupe hydroxy, un groupe amino, et un groupe nitro.

7. Pneumatique selon l'une quelconque des revendications 1 à 6, dans lequel $R^{11}$ et $R^{12}$ sont chacun au moins un choisi dans le groupe constitué par un atome d'hydrogène et un groupe alkyle.

8. Pneumatique selon l'une quelconque des revendications 1 à 7, dans lequel la composition de caoutchouc satisfait la relation suivante par rapport à une teneur en noir de charbon par 100 parties en masse des composants de caoutchouc et une teneur en styrène totale sur la base de 100 % en masse des composants de caoutchouc :

$$\text{teneur en noir de charbon / teneur en styrène totale} > 4,0.$$

9. Pneumatique selon l'une quelconque des revendications 1 à 8, dans lequel la composition de caoutchouc satisfait la relation suivante par rapport à une teneur en silice par 100 parties en masse des composants de caoutchouc et une teneur en styrène totale sur la base de 100 % en masse des composants de caoutchouc :

$$\text{teneur en silice / teneur en styrène totale} < 7,0.$$

10. Pneumatique selon l'une quelconque des revendications 1 à 9, qui est un pneumatique pour poids lourds.

11. Pneumatique selon l'une quelconque des revendications 1 à 10, dans lequel la teneur totale de composés de formule (1) par 100 parties en masse des composants de caoutchouc est de 0,2 partie en masse ou plus.

12. Pneumatique selon l'une quelconque des revendications 1 à 11, dans lequel la composition de caoutchouc comprend au moins un composé représenté par la formule (1-1) suivante :

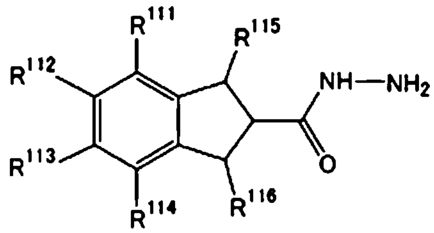

(1-1)

dans laquelle $R^{111}$ à $R^{116}$ représentent chacun indépendamment au moins choisi dans le groupe constitué par un atome d'hydrogène, un groupe hydroxy, un groupe amino, et un groupe nitro.

13. Pneumatique selon l'une quelconque des revendications 1 à 12, dans lequel la teneur de la silice par 100 parties en masse des composants de caoutchouc est de 3 parties en masse ou plus.

14. Pneumatique selon l'une quelconque des revendications 1 à 13, dans lequel la teneur de la silice par 100 parties en masse des composants de caoutchouc est de 50 parties en masse ou moins.

15. Pneumatique selon l'une quelconque des revendications 1 à 13, dans lequel la teneur en charge totale par 100 parties en masse des composants de caoutchouc est de 30 parties en masse ou plus et de 150 parties en masse ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019099746 A
- EP 2336234 A1
- JP 2019508407 T